# EUROPEAN PATENT APPLICATION

(11) **EP 1 826 989 A1**
(43) Date of publication of application: **29.08.2007**
(21) Application number: 07000552.5
(22) Date of filing: 11.01.2007
(51) Int. Cl.: H04M 1/02

(54) **Folder type mobile terminal and operation control method for the same**

(30) Priority: 23.02.2006 KR 20060017484
(71) Applicant: Samsung Electronics Co., Ltd., Suwon-si, Gyeonggi-Do (KR)
(72) Inventor: Yoon, Sang Hyeon, Gyeonggi-do (KR)
(74) Representative: Boakes, Jason Carrington

(57) **Abstract**

The folder type mobile terminal is operated in a horizontal mode or vertical mode depending on a display state of a display unit of which a length and height are different, and includes a digital broadcast processor for receiving and processing digital broadcast data in a broadcast reception mode, a folder movement detector for detecting opening and closing of a folder, the display unit for outputting the digital broadcast data in the horizontal mode, and a controller for controlling an operation of the folder type mobile terminal to maintain the call if the folder is closed in response to an incoming call during the broadcast reception mode. Accordingly, if the folder is closed for a moment and then reopened while an event is in progress, the predetermined event is retained in progress.

## Description

### BACKGROUND OF THE INVENTION

### 1. Field of the Invention

The present invention relates generally to a mobile terminal and more particularly to a folder type mobile terminal, and to an operation control method for the folder type mobile terminal.

### 2. Description of the Related Art

Due to advances in mobile communication technologies and popularization thereof, mobile terminals can support various functions such as text and image transmission in addition to phone call processing.
In particular, advances in memories capable of storing vast amounts of digital multimedia data such as moving pictures and music videos have enabled recent development and commercialization of mobile terminals having digital multimedia broadcasting (DMB) reception capabilities, for example, DMB phones.

In a DMB environment, various multimedia signals including audios and videos are digitally modulated and delivered to users. Particularly, the users in motion can receive various multimedia programs through portable personal or in-vehicle receivers equipped with an omnidirectional receiving antenna.

A conventional DMB phone has a display unit whose length and height are different, and displays visual images on a screen in a horizontal mode where the length of the screen is greater than the height or in a vertical mode where the length of the screen is less than the height. Generally, the DMB phone is used as a broadcast receiver in the horizontal mode for outputting digital broadcast data, and used as a mobile terminal in the vertical mode for handling phone calls.

This is because the user has difficulty in operating his/her DMB phone in the horizontal mode for a phone call owing to structural aspects thereof such as the arrangement of a microphone and speaker.

In the case of a folder type mobile terminal capable of DMB reception that supports the horizontal mode and vertical mode according to a display state of the folder, when a call is received during DMB reception in the horizontal mode, the user must close the folder opened in the horizontal mode and then reopen the folder in the vertical mode to answer the call.

However, in a conventional folder type mobile terminal, if the user closes the folder while a predetermined event such as DMB reception is in progress with the folder open, the predetermined event is terminated.

When the user closes the folder in response to an incoming call during DMB reception in the horizontal mode and then reopens the folder in the vertical mode, both DMB reception and the call may be interrupted.

### SUMMARY OF THE INVENTION

The present invention has been made in view of the above problems, and an object of the present invention is to provide a folder type mobile terminal and an operation control method for the folder type mobile terminal for maintaining an event instead of immediate termination, when a folder is closed during processing a predetermined event with the folder being open.

Another object of the present invention is to provide a folder type mobile terminal and an operation control method for the folder type mobile terminal wherein an ongoing event is maintained even though a folder is closed and reopened for switching between horizontal and vertical modes.

Another object of the present invention is to provide a folder type mobile terminal and an operation control method for the folder type mobile terminal for enabling convenient conversation in response to an incoming call during reception of digital multimedia broadcasting (DMB).

In accordance with the present invention, a folder type mobile terminal includes a folder movement detector for detecting opening and closing of a folder, and a controller for controlling the folder type mobile terminal to process a first event with the folder open and, in response to closing of the folder, maintain the first event until reopening of the folder.

The controller resumes the first event if the folder is reopened, and terminates the first event if the folder is not opened until a preset event maintenance duration expires.

The controller measure the time elapsed from closing of the folder and compares the elapsed time with the event maintenance duration to determine whether the event maintenance duration expires.

In accordance with the present invention, a folder type mobile terminal that operates in the horizontal mode or vertical mode according to a display state of a display unit of which length and height are different, includes a digital broadcast processor for receiving and processing digital broadcast data in a broadcast reception mode, a folder movement detector for detecting opening and closing of a folder, the display unit for outputting the digital broadcast data in a horizontal mode, and a controller for controlling an operation of the folder type mobile terminal to maintain the call, if the folder is closed in response to an incoming call during output of the digital broadcast data.

If the folder is closed in response to the call during the output of the digital broadcast data, the controller terminates the broadcast reception mode of the digital broadcast processor or maintains both the broadcast reception mode and the phone mode.

When the folder is reopened, the controller connects the call to the receiving party.

In response to the call connection, the controller terminates the broadcast reception mode or maintains the broadcast reception mode and blocks output of an audio portion of the received digital broadcast data.

When the call connection is terminated, the controller unblocks output of the audio portion of the received digital broadcast data.

If the folder is not reopened until a preset event maintenance duration expires, the controller rejects the call.

Alternatively, if the folder is not reopened until a preset event maintenance duration expires, the controller both terminates the broadcast reception mode and rejects the call.

The folder type mobile terminal further includes a display mode determiner for determining whether a display mode of the mobile terminal is the horizontal mode or vertical mode, and the controller identifies the display mode through the display mode determiner upon reopening the folder, and connects the call to the receiving party if the display mode is the vertical mode, or resumes the broadcast reception mode if the display mode is the horizontal mode.

Upon resumption of the broadcast reception mode, the controller rejects the call.

If the folder is not reopened until a preset event maintenance duration expires, the controller both terminates the broadcast reception mode and rejects the call.

In response to the call connection, the controller terminates the broadcast reception mode of the digital broadcast processor or maintains the broadcast reception mode and blocks output of an audio portion of the received digital broadcast data.

When the call connection is terminated, the controller unblocks output of the audio portion of the received digital broadcast data.

The controller measures the time elapsed from the closing of the folder and compares the elapsed time with the event maintenance duration to determine whether the event maintenance duration expires.

In accordance with the present invention, an operation control method for a folder type mobile terminal includes the steps of processing a first event while a folder is open, maintaining the first event upon closing the folder until the folder is reopened, resuming processing of the first event upon opening the folder, and rejecting the first event if the folder is not opened until a preset event maintenance duration expires.

Preferably, the maintaining step includes measuring, in response to the closing of the folder, the time elapsed from the closing of the folder; comparing the elapsed time with the event maintenance duration; and retaining, if the elapsed time is within the event maintenance duration, the first event.

In accordance with the present invention, an operation control method for a folder type mobile terminal including a display unit of which length and height are different includes operating the mobile terminal in a broadcast reception mode to receive, process and output digital broadcast data in a horizontal mode, maintaining the call upon an incoming call, connecting the call to the receiving party if a folder is opened and rejecting the call if the folder is not opened until a preset event maintenance duration expires.

At the rejecting step, the broadcast reception mode is terminated in addition to rejection of the call.

At the maintaining step, the broadcast reception mode is terminated and the call is maintained, or both the broadcast reception mode and the call mode are maintained.

The maintaining step further includes switching from the broadcast reception mode to a broadcast wait mode, in which output of an audio portion of the received digital broadcast data is blocked.

The operation control method may further include switching from the broadcast wait mode back to the broadcast reception mode after terminating the call connection.
In accordance with the present invention, an operation control method for a folder type mobile terminal including a display unit whose length and height are different and operating in a horizontal mode or vertical mode according to a display state of the display unit includes operating the mobile terminal in a broadcast reception mode to receive, process and output digital broadcast data in a horizontal mode, informing of the reception of the call in response to an incoming call, maintaining an event of maintaining the broadcast reception mode and the call in response to closing of a folder, identifying a display mode of the mobile terminal in response to opening of the folder, connecting the call to the receiving party if the identified display mode is a vertical mode, resuming the broadcast reception mode if the identified display mode is a horizontal mode, and terminating the broadcast reception mode and rejecting the call if the folder is not opened until a preset event maintenance duration expires.

The connecting step further includes terminating the broadcast reception mode, or switching from the broadcast reception mode to a broadcast wait mode.

In the broadcast wait mode, output of an audio portion of the received digital broadcast data is blocked.

The operation control method may further include switching from the broadcast wait mode back to the broadcast reception mode after termination of the call connection.

Preferably, the resuming step further includes rejecting the call.

### BRIEF DESCRIPTION OF THE DRAWINGS

The above and other objects, features and advantages of the present invention will be more apparent from the following detailed description in conjunction with the accompanying drawings, in which:
FIG. 1 is a block diagram illustrating the configuration of a mobile terminal according to the present invention;
FIG. 2 is a block diagram illustrating the configuration of a mobile terminal according to the present invention;
FIG. 3 is a flow chart illustrating steps of an operation control method for a mobile terminal according to the present invention;
FIG. 4 is a flow chart illustrating steps of an operation control method for a mobile terminal according to the present invention;
FIGS. 5A to 5B are flow charts illustrating steps of an operation control method for a mobile terminal according to the present invention;
FIGS. 6A to 6B are flow charts illustrating steps of an operation control method for a mobile terminal according to the present invention; and
FIGS. 7A to 7B are flow charts illustrating steps of an operation control method for a mobile terminal according to the present invention.

### DETAILED DESCRIPTION OF PREFERRED EMBODIMENTS

Hereinafter, preferred embodiments of the present invention are described in detail with reference to the accompanying drawings. The same reference symbols identify the same or corresponding elements in the drawings. Some constructions or processes known in the art are not described for the sake of clarity and conciseness.

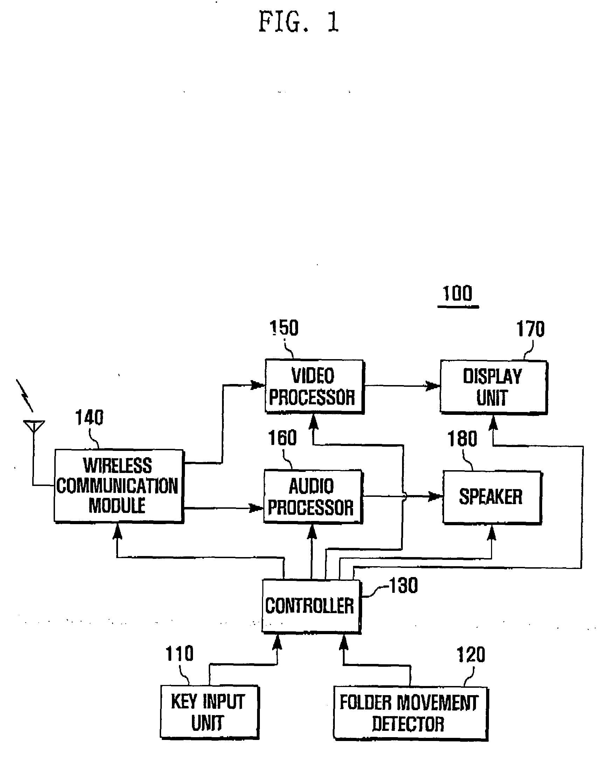

FIG. 1 is a block diagram illustrating the configuration of a mobile terminal according to the present invention. Referring to FIG. 1, the mobile terminal 100 includes a key input unit 110, a folder movement detector 120, a controller 130, a wireless communication module 140, a video processor 150, an audio processor 160, a display unit 170, and a speaker 180.

The key input unit 110 provides a user interface for receiving a user input to control an operation of the mobile terminal 100. In particular, the key input unit 110 receives a user input to handle a predetermined event and transmits the user input to the controller 130. For example, while the mobile terminal 100 operates in a phone mode, the key input unit 110 receives a user input to determine whether to terminate a call, and transmits the user input to the controller 130.

The folder movement detector 120 detects movement of a folder (not shown) such as opening or closing of the folder, and transmits the detection result to the controller 130.

The controller 134 controls the mobile terminal 100 using user inputs through the key input unit 110 or internally stored operational programs. In particular, the controller 130 controls the mobile terminal 100 depending on a folder open or close signal generated from the folder movement detector 120. When the mobile terminal 100 is in the process of handling a predetermined event, such as a phone call or character input, while the folder is open, the controller 130 controls an operation of the mobile terminal 100 if the folder is closed to maintain the predetermined event until the folder is reopened.

If the folder is closed and then reopened, the controller 130 controls an operation of the mobile terminal 100 to resume handling of the predetermined event upon reopening of the folder.

Preferably, if the folder is closed, the controller 130 measures the time elapsed from closing of the folder and compares the measured elapsed time with a preset event maintenance duration, and rejects the predetermined event if the folder is not reopened until the event maintenance duration expires.

The wireless communication module 140 provides a communication interface to a wireless communication network for transmitting and receiving voice data and character data.

The video processor 150 pre-processes image data to be displayed through the display unit 170, and changes a current display mode of the display unit 170 under the control of the controller 130.

The audio processor 160 pre-processes an acoustic signal to be output to the speaker 180.

As described above, the mobile terminal 100 of FIG. 1 determines whether to maintain an event in progress, continue to process the predetermined event or terminate handling of the predetermined event depending on a folder open or close signal generated by the folder movement detector 120. In particular, the mobile terminal 100 maintains a predetermined event in progress even if the folder is closed for a preset event maintenance duration and then reopened for user's convenience.

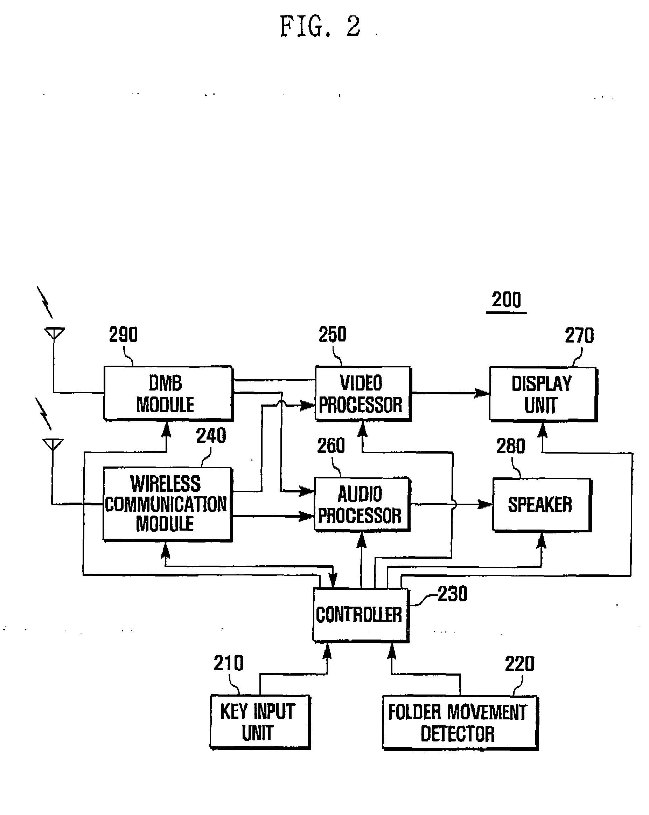

FIG. 2 is a block diagram illustrating the configuration of a mobile terminal according to the present invention. The mobile terminal of FIG. 2 has a display unit of which length and height are different, and operates in the horizontal mode or vertical mode depending on a display state of the display unit.

Referring to FIG. 2, the mobile terminal 200 includes a key input unit 210, a folder movement detector 220, a controller 230, a wireless communication module 240, a video processor 250, an audio processor 260, a display unit 270, a speaker 280, and a digital multimedia broadcasting (DMB) module 290.

The key input unit 210 provides a user interface for receiving a user input to control an operation of the mobile terminal 200. In particular, the key input unit 210 receives a user input to handle a predetermined event and transmits the user input to the controller 230. For example, while the mobile terminal 200 operates in a phone mode, the key input unit 210 receives the user input to determine whether to terminate a corresponding call, and transmits the user input to the controller 230.

The folder movement detector 220 detects movement of a folder (not shown) such as the status of opening or closing of the folder, and transmits the detection result to the controller 230,

The controller 230 controls the mobile terminal 200 using user inputs through the key input unit 210 or internally stored operational programs. In particular, the controller 230 controls an operation of the mobile terminal 200 depending on a folder open or close signal from the folder movement detector 220. When a call is received through the wireless communication module 240 while the mobile terminal 200 is outputting DMB data received through the DMB module 290 in the horizontal mode, the controller 230 maintains the call if a folder close signal is received from the folder movement detector 220 until a folder open signal is received. Further, if the folder is reopened within a preset event maintenance duration from closing of the folder, the controller 230 establishes a connection to the call.

If the folder is not reopened within the event maintenance duration from the closing of the folder, the controller 230 rejects the call. If the folder is closed, the controller 230 measures the time elapsed from the closing of the folder, compares the measured elapsed time with the event maintenance duration, and determines whether the event maintenance duration is passed when the elapsed time is not within the event maintenance duration.

If the folder is closed, the controller 230 terminates reception of DMB data and maintains only the call, and establishes a connection to the call if the folder is reopened.

Alternatively, when the folder is closed, the controller 230 may maintain both reception of DMB data and the call. Then, when the folder is reopened, the controller 230 may either perform reception of DMB data or establish a connection to the call depending on a display mode of the mobile terminal 200.

When the folder is reopened, the controller 230 identifies the display mode of the mobile terminal 200, controls the mobile terminal 200 to terminate reception of DMB data and establishes a connection to the call if the display mode is the vertical mode. If the mode is the horizontal mode, the controller 230 continues reception of DMB data and rejects the call.

The mobile terminal 200 further includes a mode determiner (not shown) for determining whether the mobile terminal 200 is in the horizontal mode or vertical mode.

If the folder is not reopened until the event maintenance duration expires, the controller 230 rejects the call and terminates reception of DMB data. Upon closing of the folder, the controller 230 measures the time elapsed from the closing of the folder and compares the measured elapsed time with the event maintenance duration.

The wireless communication module 240 provides a communication interface to a wireless communication network. The wireless communication module 240 informs an incoming call during outputting DMB data by the mobile terminal 200 to the controller 230. The controller 230 uses the status information on folder movement after the incoming call is received from the folder movement detector 220.

The video processor 250 pre-processes image data to be displayed by the display unit 270, and changes a current display mode of the display unit 270 under the control of the controller 230. The video processor 250 preferably pre-processes image data received from the DMB module 290 or wireless communication module 240 for displaying by the display unit 270. If a call is received from the wireless communication module 240, the video processor 250 preferably creates information on the received call and transmits the call information to the display unit 270.

The audio processor 260 pre-processes an acoustic signal to be output to the speaker 280.

The display unit 270 displays image data from the video processor 250, and changes a current display mode under the control of the video processor 250. The display unit 270 also outputs DMB data received by the DMB module 290 in the horizontal mode of the mobile terminal 200.

The DMB module 290 receives DMB data under the control of the controller 230 and performs operations necessary for outputting the DMB data, for example, for decoding based on the Moving Picture Experts Group's (MPEG's) standard.

As described above, when a call is received during outputting DMB data, the mobile terminal 200 of FIG. 2 determines whether to output DMB data and/or to establish a connection to the call depending on opening/closing states of the folder after the call is received. In particular, if the user closes the folder in the horizontal mode and reopens the folder in the vertical mode, the call is maintained. As a result, the user held in DMB reception mode can conveniently respond an incoming call.

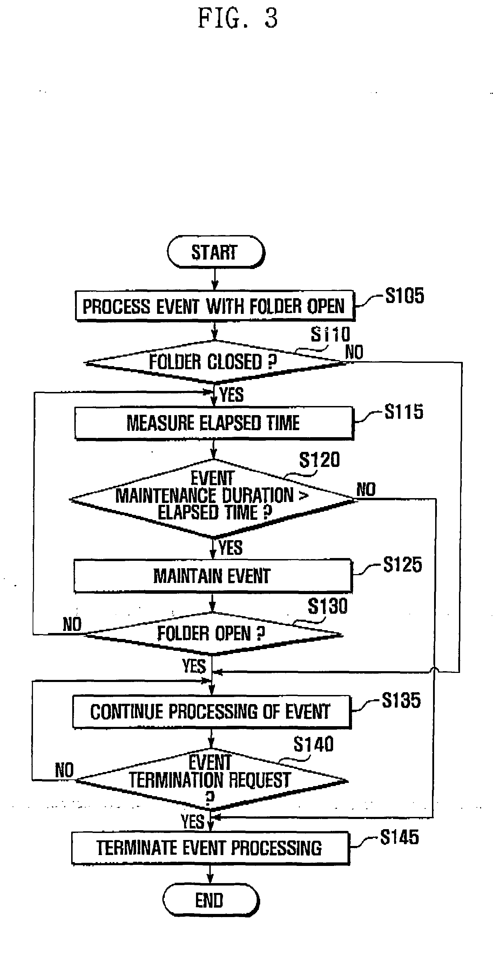

FIG. 3 is a flow chart illustrating steps of an operation control method for a mobile terminal according to the present invention. In the operation control method of FIG. 3, when an event is in progress in the folder type mobile terminal while a folder is opened, the predetermined event is maintained even if the folder is closed and then reopened within a predetermined time duration.

When a predetermined event such as a call mode is in progress with the folder open (S105), the mobile terminal measures the time elapsed from closing of the folder (S115) if the folder is closed (S110).

The elapsed time is compared with an event maintenance duration set in advance and, if the elapsed time is within the event maintenance duration (S120), the mobile terminal maintains the predetermined event (S125). More particularly, the mobile terminal maintains the predetermined event in progress from the closing time of the folder until the folder is reopened.
If the folder is opened while the predetermined event is maintained (S130), the mobile terminal continues to process the maintained event (S135). Step S 135 is repeated until processing of the predetermined event is terminated. If a termination request for the predetermined event is issued (S140), the mobile terminal terminates the predetermined event (S145).

If the elapsed time passes the event maintenance duration with the folder closed at step S120, the mobile terminal terminates the maintained event (S145). More particularly, if the folder is not reopened until the preset event maintenance duration has expired, the mobile terminal terminates the predetermined event.

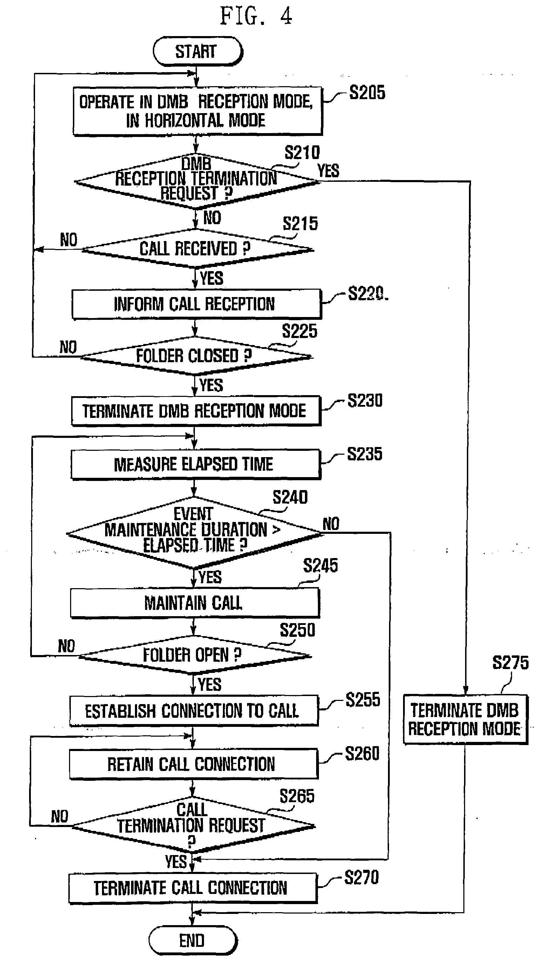

FIG. 4 is a flow chart illustrating steps of an operation control method for a mobile terminal according to the present invention. The operation control method operated by a mobile terminal that has a display unit of which length and height are different, is processed in a horizontal mode or vertical mode depending on opening states of the display unit. If a call is received during outputting DMB data in the horizontal mode, DMB data output is blocked and the call is automatically connected in response to opening and closing states of the folder after the call is received.

When the mobile terminal is operated in a DMB reception mode in the horizontal mode (S205), the mobile terminal informs reception of the call (S220) to the user by displaying a pop-up window, if a call is received (S215).

After the call is received, the mobile terminal terminates the DMB reception mode (S230), and measures the time elapsed from the closing of the folder (S235), if the folder is closed (S225). The elapsed time is compared with an event maintenance duration set and the mobile terminal maintains the predetermined event (S245), if the elapsed time is within the event maintenance duration (S240). More particularly, the mobile terminal maintains the call from the closing time of the folder until the folder is reopened.

If the folder is opened while the call is maintained (S250), the mobile terminal connects the call (S255), and retains the call connection (S260). When a call termination request is issued (S265), the mobile terminal disconnects the call (S270).

If the elapsed time passes the event maintenance duration while the folder is closed at step S240, the mobile terminal rejects the received call (S270). More particularly, if the folder is not reopened until the preset event maintenance duration is expired, the mobile terminal rejects the received call.

When a DMB reception termination request is input during the DMB reception mode in the horizontal mode at step S205 (S210), the mobile terminal terminates the DMB reception mode (S275).

In response to an incoming call during DMB reception in the horizontal mode, the user can respond to the call without the interruption of the call by closing the folder and reopening the folder in the vertical mode.

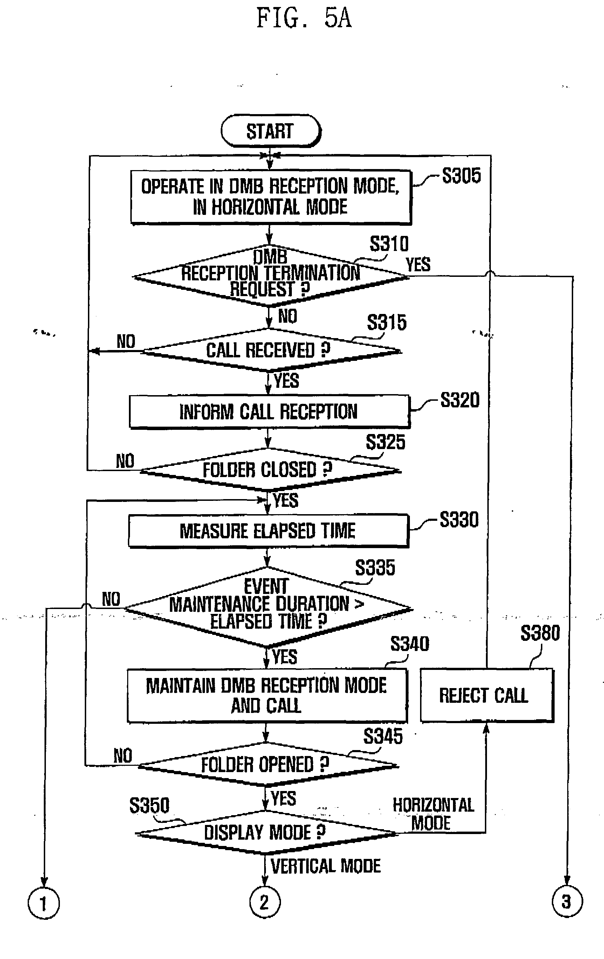

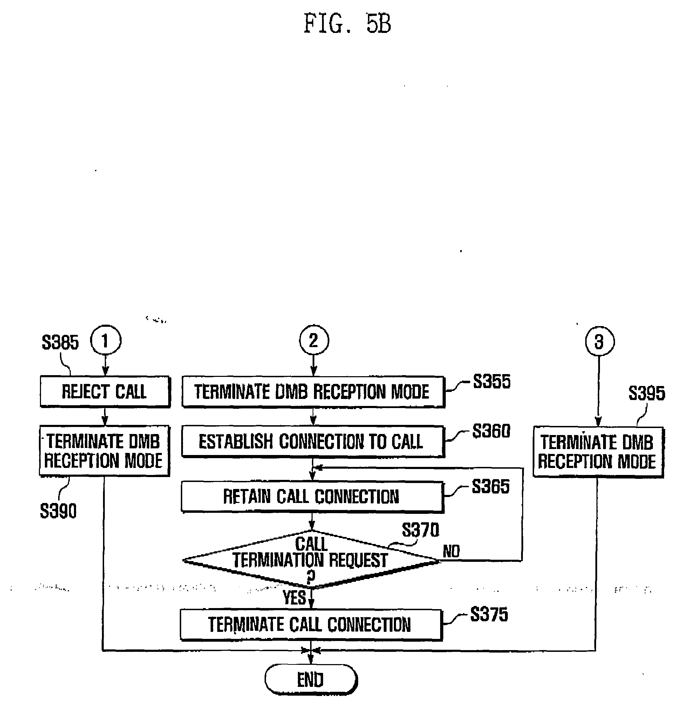

FIGs. 5A to 5B are flow charts illustrating steps of an operation control method for a mobile terminal according to the present invention. The operation control method operated by a mobile terminal that has a display unit of which length and height are different, is processed in the horizontal mode or vertical mode depending on display states of the display unit. If a call is received during outputting DMB data in the horizontal mode, the DMB data output or an automatic connection to the call is selectively performed depending on opening/closing states of the folder.

When the mobile terminal is operated in a DMB reception mode in a horizontal mode (S305), the mobile terminal informs reception of the call to the user by displaying a pop-up window (S320), if a call is received (S315)

After the call is received, the mobile terminal measures the time elapsed from closing of the folder (S330), if the folder is closed (S325). If the elapsed time is within an event maintenance duration set in advance (S335), the mobile terminal maintains the DMB reception mode and the call (S340). More particularly, the mobile terminal maintains the DMB reception mode and the call from the closing time of the folder until the folder is reopened.

If the folder is opened while the call is maintained (S345), the mobile terminal identifies the display mode thereof (S350). If the display mode is the vertical mode, the mobile terminal terminates the DMB reception mode (S355), establishes a connection to the call (S360), and retains the call connection (S365). When a call termination request is issued (S370), the mobile terminal disconnects the call connection (S375). If the display mode is the horizontal mode at step S350, the mobile terminal rejects the call (S380) and step S305 and subsequent steps are repeated.

If the elapsed time passes the event maintenance duration while the folder is closed at step S335, the mobile terminal rejects the call (S385) and terminates the DMB reception mode (S390). More particularly, if the folder is not reopened until the preset event maintenance duration has expired, the mobile terminal terminates the ongoing DMB reception mode and rejects the received call.
When a DMB reception termination request is input during the DMB reception mode in the horizontal mode at step S305 (S310), the mobile terminal terminates the DMB reception mode (S395).

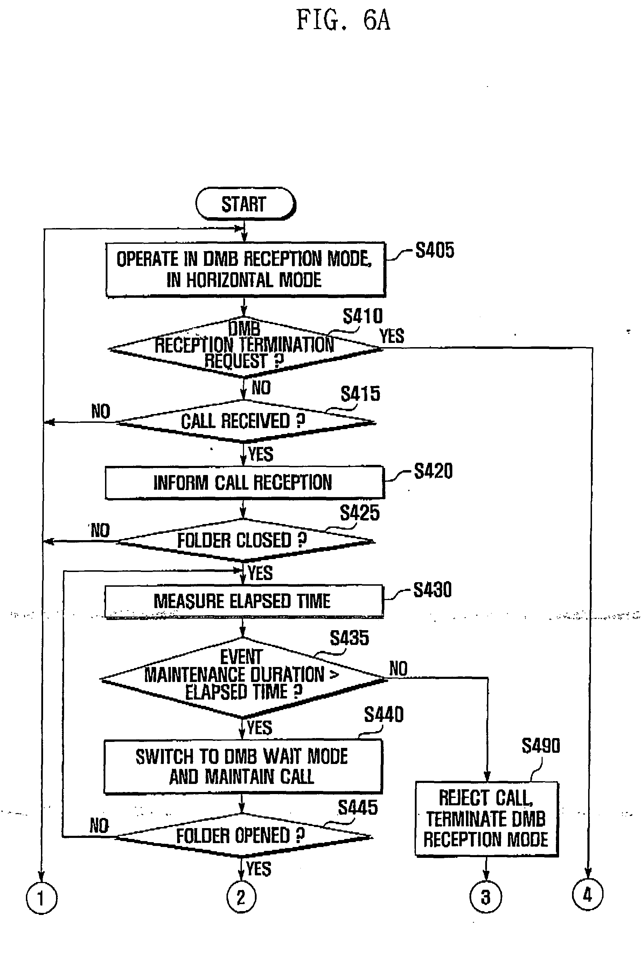

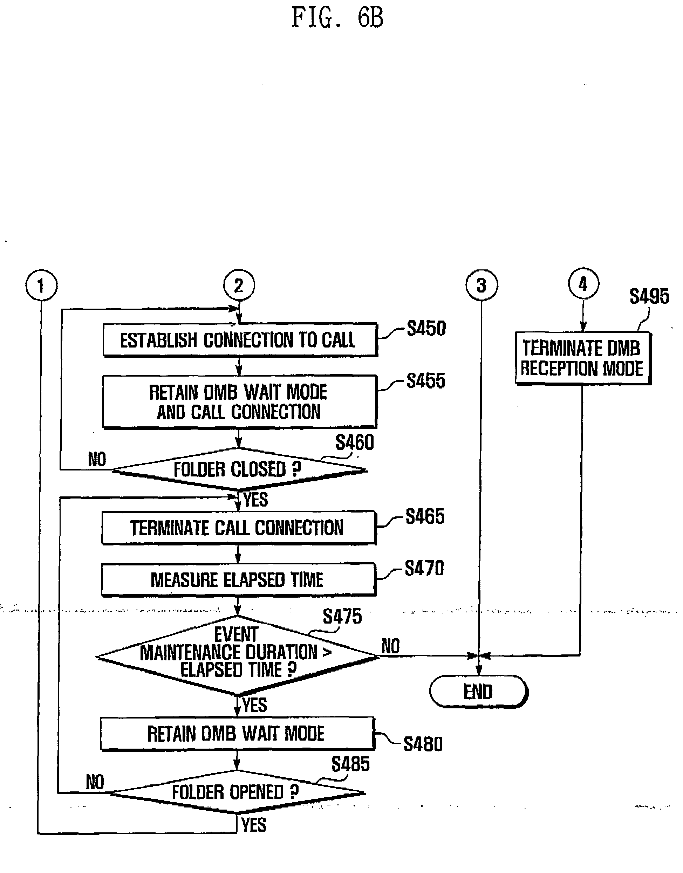

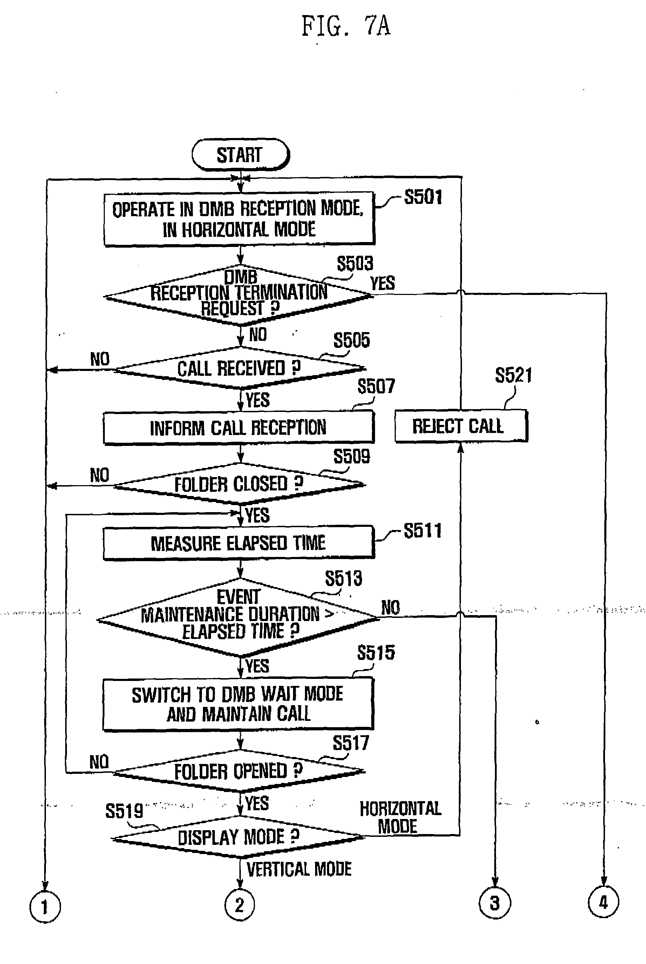

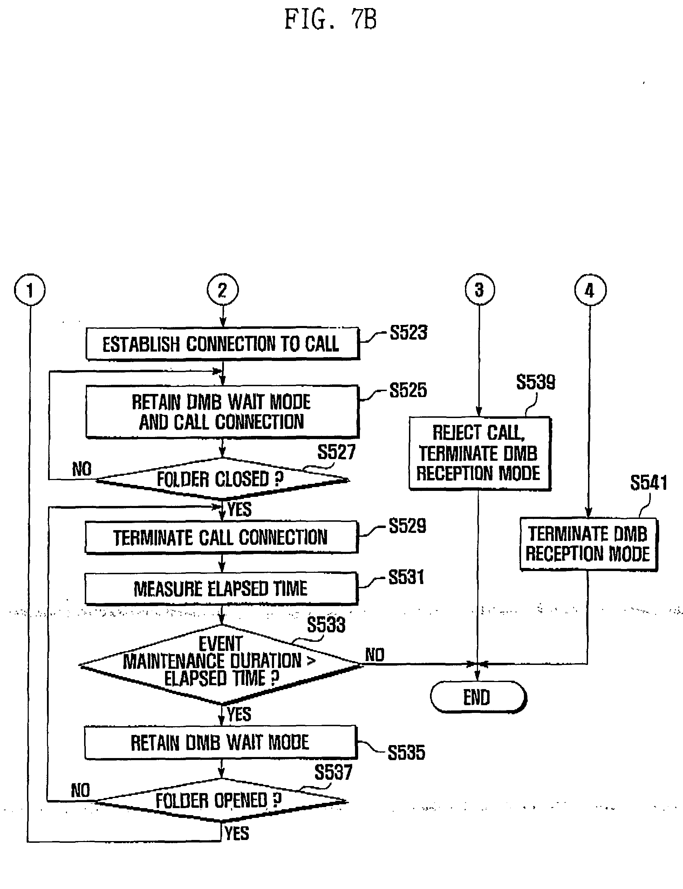

In the operation control method of FIGS, 5A to 5B, in response to an incoming call during DMB reception in the horizontal mode, the mobile terminal identifies the display mode of the folder if the user closes the folder and reopens the folder. The mobile terminal connects the call for conversation if the folder is reopened in the vertical mode and rejects the call to continue DMB reception if the folder is reopened in the horizontal mode. Thus, the user continues DMB reception or answers the call selectively by closing and reopening the folder.
In the operation control method of FIG. 4 or FIGs. 5A to 5B, if the folder is closed in response to an incoming call during DMB reception, the mobile terminal maintains both the DMB reception mode and the call until the folder is reopened. The user either answers the call or continues the DMB reception mode by reopening the folder. More particularly, a call connection causes termination of DMB reception, and continuation of DMB reception causes rejection of the call.
However, the present invention is not limited to the above operation control methods. Preferably, in operation control methods of FIGs. 6 and 7, DMB reception is maintained after a call connection or a call is maintained after resumption of DMB reception.
When the mobile terminal operates in a DMB reception mode in a horizontal mode (S405), the mobile terminal informs reception of the call to the user by displaying a pop-up window (S420), if a call is received (S415).

After the call is received, the mobile terminal measures the time elapsed from closing of the folder (S430) if the folder is closed (S425). If the elapsed time is within an event maintenance duration set (S435, the mobile terminal maintains the call (S440). More particularly, the mobile terminal maintains the call from the closing time of the folder until the folder is reopened. Preferably, at step S440, the operation mode is switched from the DMB reception mode to a DMB wait mode, in which a DMB audio signal is blocked to avoid an interference between speech sound and DMB audio sound.

If the elapsed time passes the event maintenance duration while the folder is closed at step S435, the mobile terminal rejects the call and terminates the DMB reception mode (S490).

If the folder is opened with the call maintained (S445), the mobile terminal establishes a connection to the call (S450), and maintains the DMB wait mode and call connection (S455) until the folder is closed (S460). Because closing state of the folder at step S460 indicates the end of a call, step S460 is also performed by indicating the end of a call such as by pressing the 'End' button.

If the end of the call is detected when the folder is closed at step S460, the mobile terminal disconnects the call connection (S465). The mobile terminal then resumes DMB data output by switching from the DMB wait mode to the DMB reception mode, thereby enabling the user to resume DMB reception after the call is answered.

The mobile terminal measures the time elapsed from detection of the end of the call (S470). If the elapsed time is within an event maintenance duration set (S475), the mobile terminal maintains the DMB wait mode (S480). If the folder is reopened (S485), step S405 and subsequent steps are repeated for DMB reception.

When a DMB reception termination request is input during the DMB reception mode in the horizontal mode at step S405 (S410), the mobile terminal terminates the DMB reception mode (S495).

FIGs- 7A to 7B are flow charts illustrating steps of an operation control method for a mobile terminal according to another embodiment of the present invention of FIGs. 6A to 6B. The operation control method of FIGs. 7A to 7B include different steps related with opening states of the folder such as a horizontal mode or vertical mode. More particularly, when a DMB reception mode and a call are maintained after the folder is closed, the mobile terminal resumes DMB reception if the folder is opened in the horizontal mode, and handles the call and then resumes DMB reception if the folder is opened in the vertical mode.

When the mobile terminal is operated in a DMB reception mode in a horizontal mode (S501), the mobile terminal informs reception of the call to the user by displaying a pop-up window (S507) if a call is received (S505).

After the call is received, the mobile terminal measures the time elapsed from closing of the folder (S511) if the folder is closed (S509). If the elapsed time is within an event maintenance duration set (S513), the mobile terminal maintains the call (S515). More particularly, the mobile terminal maintains the call from the closing time of the folder until the folder is reopened. Preferably, at step S515, the operation mode is switched from the DMB reception mode to a DMB wait mode, in which a DMB audio signal is blocked to avoid an interference between speech sound and DMB audio sound.

If the elapsed time passes the event maintenance duration while the folder is closed at step S513, the mobile terminal rejects the call and terminates the DMB reception mode (S539).

If the folder is opened while the call is maintained (S517), the mobile terminal identifies a display mode associated with an opening state of the folder such as the horizontal mode or vertical mode (S519).

If the display mode is the vertical mode, the mobile terminal establishes a connection to the call (S523), and maintains the DMB wait mode and call connection (S525) until the folder is closed (S527). Because the closing state of the folder at step S527 indicates the end of a call, step S527 is also performed by indicating the end of a call such as by pressing the 'End' button.

If the end of the call is detected when the folder is closed at step S527, the mobile terminal disconnects the call connection (S529). The mobile terminal then resumes to output of DMB data by switching from the DMB wait mode to the DMB reception mode, thereby enabling the user to resume DMB reception after the call is answered.

The mobile terminal measures the time elapsed from detection of the end of the call (S531). If the elapsed time is within an event maintenance duration set (S533), the mobile terminal maintains the DMB wait mode (S535). If the folder is reopened (S537), step S501 and subsequent steps are repeated for DMB reception.
If the display mode is the horizontal mode at step S519, the mobile terminal rejects the call (S521) and resumes DMB reception. More particularly, step S501 and subsequent steps are repeated. In FIGs. 7A to 7B, the call is rejected at step S521 and then DMB reception is resumed at step S501. Alternatively, the call may be maintained. However, if the call is maintained, the call is treated as a new call, performing steps after step S505. More particularly, the call is preferably rejected for resuming DMB reception as illustrated at step S521 in FIGs. 7A to 7B.

When a DMB reception termination request is input during the DMB reception mode in the horizontal mode at step S501 (S503), the mobile terminal terminates the DMB reception mode (S541).

The present invention provides a folder type mobile terminal and an operation control method for the folder type mobile terminal when a predetermined event is in progress while a folder is opened, the predetermined event is not immediately rejected but maintained for a predetermined time even if the folder is closed, thereby providing convenience to the user. More particularly, when a call is received when the mobile terminal performs DMB reception in the horizontal mode, the received call is maintained if the user closes the folder for a moment and then reopens the folder to switch a display mode from the horizontal mode to the vertical mode upon receiving the call. Thus, the user can conveniently answer an incoming call during DMB reception.

While preferred embodiments of the present invention have been shown and described in this specification, it will be understood by those skilled in the art that various changes or modifications of the embodiments are possible without departing from the spirit and scope of the invention as defined by the appended claims. More particularly, a mobile terminal maintains an initial DMB reception mode even if a folder is closed to switch a display mode from a horizontal mode to a vertical mode. The present invention is also applicable to the case where the mobile terminal reproduces Moving Picture Experts Group 1 (MPEG-1) audio layer 3 (MP3) files in a horizontal mode. The present invention is further applicable to switching from a vertical mode to a horizontal mode.

## Claims

1. An operation control method for a folder type mobile terminal, comprising the steps of:
processing a first event while a folder is opened;
maintaining the first event upon closing the folder until reopening of the folder; and
resuming the first event-upon opening the folder

2. The operation control method of claim 1, further comprising rejecting the first event if the folder is not opened until a preset event maintenance duration has expired.

3. The operation control method of claim 1, wherein the maintaining step includes:
measuring a time elapsed from the closing state of the folder upon closing the folder;
comparing the elapsed time with the event maintenance duration; and
retaining the first event if the elapsed time is within the event maintenance duration.

4. An operation control method for a folder type mobile terminal including a display unit of which a length and height are different, the mobile terminal operating in a horizontal mode or vertical mode depending on a display state of the display unit, the method comprising the steps of:
operating the mobile terminal in a broadcast reception mode to receive, process and output digital broadcast data in the horizontal mode;
maintaining a call upon receiving an incoming call; and
connecting the call to a receiving party if a folder is opened.

5. The operation control method of claim 4, further comprising rejecting the call if the folder is not opened until a preset event maintenance duration has expired.

6. The operation control method of claim 4, wherein at the maintaining step the broadcast reception mode is terminated and the call is maintained.

7. The operation control method of claim 6, wherein the maintaining step includes :
blocking reception of digital broadcast data upon closing the folder;
measuring the time elapsed from the closing state of the folder;
comparing the elapsed time with the event maintenance duration; and
retaining the call if the elapsed time is within the event maintenance duration.

8. The operation control method of claim 4, wherein at the maintaining step both the broadcast reception mode and the call are maintained.

9. The operation control method of claim 8, wherein the maintaining step includes :
measuring the time elapsed from the closing state of the folder;
comparing the elapsed time with the event maintenance duration; and
retaining both the broadcast reception mode and the call if the elapsed time is within the event maintenance duration.

10. The operation control method of claim 9, wherein the maintaining step further includes switching from the broadcast reception mode to a broadcast wait mode.

11. The operation control method of claim 10, wherein at the broadcast wait mode, output of an audio portion of the received digital broadcast data is blocked.

12. The operation control method of claim 10, further comprising switching from the broadcast wait mode back to the broadcast reception mode after the call connection is terminated.

13. The operation control method of claim 8, wherein at the rejecting step the broadcast reception mode is terminated and the call is rejected.

14. An operation control method for a folder type mobile terminal including a display unit of which a length and height are different, the mobile terminal operating in a horizontal mode or vertical mode depending on a display state of the display unit, the method comprising the steps of:
operating the mobile terminal in a broadcast reception mode to receive, process and output digital broadcast data in the horizontal mode;
informing of reception of the call upon receiving an incoming call;
maintaining an event of maintaining the broadcast reception mode and the call upon closing a folder;
identifying a display mode of the mobile terminal upon opening the folder;
connecting the call to the receiving party if the identified display mode is the vertical mode; and
resuming the broadcast reception mode if the identified display mode is a horizontal mode.

15. The operation control method of claim 14, further comprising terminating the broadcast reception mode and rejecting the call if the folder is not opened until a preset event maintenance duration has expired.

16. The operation control method of claim 14, wherein the maintaining step includes:
measuring the time elapsed from the closing state of the folder;
comparing the elapsed time with the event maintenance duration; and
retaining both the broadcast reception mode and the call if the elapsed time is within the event maintenance duration.

17. The operation control method of claim 14, wherein the connecting step further includes terminating the broadcast reception mode.

18. The operation control method of claim 14, wherein the connecting step further includes switching from the broadcast reception mode to a broadcast wait mode.

19. The operation control method of claim 18, wherein at the broadcast wait mode, output of an audio portion of the received digital broadcast data is blocked.

20. The operation control method of claim 18, further comprising switching from the broadcast wait mode back to the broadcast reception mode after the call connection is terminated.

21. The operation control method of claim 14, wherein the resuming step further includes rejecting the call.

22. A folder type mobile terminal comprising:
a folder movement detector for detecting opening and closing states of a folder; and
a controller for controlling the folder type mobile terminal for processing a first event while the folder is opened and maintain the first event upon closing the folder until the folder is reopened.

23. The folder type mobile terminal of claim 22, wherein the controller resumes the first event if the folder is reopened:

24. The folder type mobile terminal of claim 23, wherein the controller terminates the first event if the folder is not opened until a preset event maintenance duration has expired.

25. The folder type mobile terminal of claim 24, wherein the controller measures the time elapsed from the closing state of the folder and compares the elapsed time with the event maintenance duration to determine whether the event maintenance duration has expired.

26. A folder type mobile terminal operating in a horizontal mode or vertical mode depending on a display state of a display unit of which a length and height are different, comprising:
a digital broadcast processor for receiving and processing digital broadcast data in a broadcast reception mode;
a folder movement detector for detecting opening and closing states of a folder,
the display unit for outputting the digital broadcast data in the horizontal mode; and
a controller for controlling an operation of the folder type mobile terminal if the folder is closed upon receiving an incoming call while outputting the digital broadcast data to maintain the call.

27. The folder type mobile terminal of claim 26, wherein the controller terminates the broadcast reception mode of the digital broadcast processor if the folder is closed upon receiving the call while outputting the digital broadcast data.

28. The folder type mobile terminal of claim 27, wherein the controller connects the call to a receiving party if the folder is reopened.

29. The folder type mobile terminal of claim 27, wherein the controller rejects the call if the folder is not reopened until a preset event maintenance duration has expired.

30. The folder type mobile terminal of claim 26, wherein the controller maintains the broadcast reception mode of the digital broadcast processor if the folder is closed upon receiving the call while outputting the digital broadcast data.

31. The folder type mobile terminal of claim 30, wherein the controller connects the call to the receiving party if the folder is reopened.

32. The folder type mobile terminal of claim 31, wherein the controller terminates the broadcast reception mode upon receiving the call connection.

33. The folder type mobile terminal of claim 31, wherein the controller maintains the broadcast reception mode of the digital broadcast processor upon receiving the call connection and blocks output of an audio portion of the received digital broadcast data.

34. The folder type mobile terminal of claim 33, wherein the controller unblocks output of an audio portion of the received digital broadcast data when the call connection is terminated.

35. The folder type mobile terminal of claim 30, wherein the controller both terminates the broadcast reception mode if the folder is not reopened until a preset event maintenance duration expires and rejects the call.

36. The folder type mobile terminal of claim 26, further comprising a display mode determiner for determining whether a display mode of the mobile terminal is the horizontal mode or vertical mode, wherein the controller identifies the display mode through the display mode determiner upon reopening the folder, and connects the call to the receiving party if the display mode is the vertical mode, or resumes the broadcast reception mode if the display mode is the horizontal mode.

37. The folder type mobile terminal of claim 36, wherein the controller both terminates the broadcast reception mode and rejects the call if the folder is not reopened until a preset event maintenance duration has expired.

38. The folder type mobile terminal of claim 36, wherein the controller terminates the broadcast reception mode of the digital broadcast processor upon receiving the call connection.

39. The folder type mobile terminal of claim 36, wherein the controller maintains the broadcast reception mode upon receiving the call connection and blocks output of an audio portion of the received digital broadcast data.

40. The folder type mobile terminal of claim 39, wherein the controller unblocks output of the audio portion of the received digital broadcast data when the call connection is terminated,.

41. The folder type mobile terminal of claim 36, wherein the controller rejects the call upon resuming the broadcast reception mode.

42. The folder type mobile terminal of claim 29, wherein the controller measures the time elapsed from the closing state of the folder and compares the elapsed time with the event maintenance duration to determine whether the event maintenance duration is has expired.

43. The folder type mobile terminal of claim 35, wherein the controller measures the time elapsed from the closing state of the folder and compares the elapsed time with the event maintenance duration to determine whether the event maintenance duration has expired.

44. The folder type mobile terminal of claim 37, wherein the controller measures the time elapsed from the closing state of the folder and compares the elapsed time with the event maintenance duration to determine whether the event maintenance duration has expired.
